# DEMANDE DE BREVET EUROPEEN

(11) **EP 3 444 017 A1**
(43) Date de publication de la demande: **20.02.2019**
(21) Numéro de dépôt: 18188716.7
(22) Date de dépôt: 13.08.2018
(51) Int. Cl.: B01D 36/02, B41F 7/32, B01D 24/00, B01D 24/14, B01D 24/46, B01D 29/05, B01D 29/56

(54) **PROCEDE ET UNITE DE RECYCLAGE D'EFFLUENT D'IMPRIMERIE**

(30) Priorité: 17.08.2017 FR 1757728
(71) Demandeur: Rezgui, Yassine, 2016 Tunis (TN)
(72) Inventeur: Rezgui, Yassine, 2016 Tunis (TN)
(74) Mandataire: Dejade & Biset

(57) **Abrégé**

Procédé de recyclage d'un effluent d'imprimerie, l'effluent d'imprimerie étant une solution aqueuse comprenant un solvant oxygéné et des additifs, mélangée à des résidus solides et/ou liquides, le procédé comprenant une étape (**101**) de première filtration, par lit granulaire, de l'effluent au moyen d'un premier dispositif (**8**) de filtration comprenant une pluralité de couches (**17, 18, 19, 20**) superposées composés de matériaux minéraux, chacune des couches comprenant de la silice, le premier dispositif de filtration étant destiné à retenir des résidus ayant au moins une première taille, et une étape (**102**) de deuxième filtration, par paroi filtrante, de l'effluent ayant subi l'étape de première filtration, l'étape de deuxième filtration étant réalisée au moyen d'un deuxième dispositif (**9**) de filtration par paroi filtrante destiné à retenir des résidus de l'effluent ayant au moins une deuxième taille, la deuxième taille étant inférieure à la première taille.

## Description

L'invention a trait au domaine des techniques d'impression, offset. Plus particulièrement, l'invention se rapporte à une unité et à un procédé de recyclage d'un effluent d'imprimerie.

Par "technique d'impression offset", il est fait référence à toute technique d'impression où une forme à reproduire, gravée sur une plaque, est encrée et transférée sur un support, par l'intermédiaire d'un cylindre en caoutchouc. Les supports sont par exemple des feuilles, feuillets, cartes, nappes, rouleaux, films ou panneaux souples. Les supports peuvent par exemple être réalisés en papier, carton, tissus, polymères ou matériau métallique.

Par "effluent d'imprimerie", il est fait référence à une solution aqueuse usagée générée ou issue d'une machine d'impression utilisée en imprimerie en procédé offset, lors de sa mise en route, de son utilisation, de son entretien et de son démantèlement. Un effluent d'imprimerie est par exemple une solution de mouillage usagée.

Lors d'une impression offset, les parties de la plaque destinées à être reproduites, qualifiées de zones imprimantes, sont encrées, et les parties apparaissant blanches sur le support, dites zones non imprimantes, ne sont pas encrées. Le cylindre en caoutchouc est dénommé blanchet.

De manière conventionnelle, dans les procédés d'impression offset, un film d'une solution aqueuse de mouillage, également dénommée solution de mouillage ou eau de mouillage, est étalé sur les zones non imprimantes de la plaque. La solution de mouillage permet notamment d'éviter la pénétration d'encre sur les zones non imprimantes, de lubrifier les zones non imprimantes, et de réguler thermiquement les rouleaux et le blanchet.

La solution de mouillage comprend en grande partie de l'eau, de l'isopropanol (IPA, CAS 67-63-0, propan-2-ol) et une composition d'additifs. L'IPA a notamment pour fonction de faciliter le mouillage de la plaque, d'augmenter la viscosité de la solution de mouillage, et a une action désinfectante, évitant la formation d'algues et de moisissures. La composition d'additifs comprend des substances telles que des acides, des phosphates, des biocides, des tensioactifs, ou des inhibiteurs de corrosion.

La qualité de la solution de mouillage joue un rôle prépondérant dans la qualité finale d'impression du support.

Une telle solution de mouillage doit demeurer la plus stable possible, de manière à ce que sa composition ne varie pas au cours du temps. Typiquement, la proportion d'IPA doit rester dans une plage comprise entre 10 et 12%. En outre, le pH ainsi que la dureté de la solution de mouillage doivent être compris dans une plage de valeurs spécifique, afin que la qualité d'impression finale soit optimale. Aussi, la solution de mouillage est légèrement acide, c'est-à-dire présente un pH figurant généralement autour de 4,5 et 5,5. De plus, la solution de mouillage a un titre hydrotimétrique caractéristique d'une eau ni trop douce, ni trop dure, c'est-à-dire situé entre 13°TH et 18°TH.

Néanmoins, lors des opérations d'impression, la solution de mouillage est inéluctablement contaminée, par exemple par des résidus d'encre, des fibres de papier, de la poussière ou d'autres impuretés organiques telles que bactéries et algues. Une telle contamination dénature la solution de mouillage, en modifiant sa composition, et réduit son efficacité lors de l'impression offset, ce qui impacte considérablement la qualité des supports imprimés.

Aussi, en cas de contamination de la solution de mouillage, il est nécessaire de procéder à son remplacement. Néanmoins, une telle opération peut s'avérer problématique.

Le remplacement de la solution de mouillage s'effectue par exemple par purge des circuits et vidange des bacs destinés à la contenir. Aussi, une telle opération de remplacement a notamment pour conséquence de rendre la machine d'imprimerie indisponible. Un tel remplacement, si trop fréquent, impacte négativement la cadence de production, et engendre des coûts supplémentaires liés aux arrêts pour maintenance.

En outre, en raison du caractère toxique de ses composants, la manipulation de la solution de mouillage usagée impose de prendre des précautions particulières en termes de protection des utilisateurs. En effet, l'IPA est connu pour être volatil, irritant et facilement inflammable en raison de son point éclair situé aux alentours de 12°C. L'isopropanol peut également provoquer des somnolences ou des vertiges. La valeur légale d'exposition professionnelle (VLEP) de l'IPA est en France de 400 ppm dans l'air des lieux de travail. De plus, certains composants de la composition d'additifs sont classifiés comme substances cancérogènes (voir par exemple *la Fiche d'Information et de Prévention n°31, juillet 2016, Caisse Régionale d'Assurance Maladie de l'Ile de France*).

Outre le problème de nocivité de la solution de mouillage pour l'être humain, se pose également le problème de la contamination environnementale, lors de son rejet. Jusqu'à la refonte du décret du 11 mars 1996, les imprimeries n'étaient pas rangées dans les Installations Classées pour la Protection de l'Environnement (ICPE), l'activité d'imprimerie ne relevant pas de catégorie des établissements dangereux visés par la loi de 1917. Les imprimeries sont depuis 1996 soumises à la réglementation des ICPE, rubrique 2450 dans la nomenclature. En fonction de l'importance des activités exercées, l'exploitation d'une imprimerie passe par une déclaration, et le plus souvent une demande d'autorisation, avec étude d'impact, étude de dangers, les eaux utilisées dans les procédés d'impression étant en général récupérées, traitées et réutilisées, de sorte qu'aucun rejet de ces eaux n'est effectué dans l'environnement. Les imprimeries, comme toute les ICPE, sont soumises au respect des prescriptions de préservation de l'eau.

Les imprimeries sont notamment assujetties au respect des dispositions de *l'annexe I de l'arrêté du 16 juillet 2003 relatif aux prescriptions générales applicables aux installations classées soumises à déclaration sous la rubrique n°2450.* Un tel arrêté impose notamment à l'exploitant de préciser les mesures prises relatives aux conditions d'utilisation, d'épuration et d'évacuation des eaux résiduaires et des émanations de toutes natures ainsi que d'élimination des déchets et résidus. Les rejets de solution de mouillage directement dans les égouts sont ainsi proscrits, une collecte spécifique doit être réalisée dans des conditions particulières, nécessitant notamment une intervention de personnels munis d'équipements de protections individuels, et qualifiés à la manutention de tels produits, ce qui engendre des coûts importants pour l'exploitant.

En outre, selon le même arrêté, le stockage de produits liquides susceptibles de créer une pollution de l'eau ou du sol est limité en quantité, ce qui crée des contraintes supplémentaires à l'exploitant. Il est donc important pour l'exploitant de limiter au maximum la consommation d'IPA et d'additifs.

Afin de pallier ces inconvénients, il a été proposé des procédés d'impression offset sans solution de mouillage, dits waterless. Par de tels procédés, les parties imprimantes sont laissées libres et les parties non imprimantes sont recouvertes de silicone, pour éviter leur encrage. Néanmoins, de tels procédés waterless revêtent en particulier les inconvénients d'être d'utilisation relativement onéreuse, de fragiliser les plaques en les rendant plus sensibles aux rayures, et de complexifier le contrôle de la température de la machine d'impression, du fait de l'absence de lubrification des plaques.

Il est également connu des dispositifs et des procédés permettant le filtrage de solution de mouillage, en vue de sa réutilisation, comme divulgué dans le document US 2006/0254439 A1 (Stinson). Ce document décrit notamment un système de recyclage lié à une presse, le système de recyclage comprenant une pompe recevant la solution de mouillage usagée, et la renvoyant vers un préfiltre à sédiment, le préfiltre ayant une grille réalisée en polypropylène, destinée à retenir les particules les plus grosses. Puis une cartouche de séparation contenant des matériaux granulaires est placée après le préfiltre, de sorte à éliminer les particules de taille de l'ordre du micromètre.

Un tel système de recyclage permet un nettoyage de la solution de mouillage, et offre la possibilité de limiter les rejets en prolongeant la durée de vie de la solution de mouillage. Néanmoins, le préfiltre à grille peut facilement se colmater, en raison de la taille importante des sédiments (par exemple des agrégats de fibres de papiers ou des poussières) pouvant se trouver dans la solution de mouillage usagée. Aussi, un tel préfiltre nécessite des opérations de maintenance fréquentes, ce qui nécessite des arrêts machine, faisant diminuer sa disponibilité.

La présente invention se propose de remédier aux inconvénients précités.

Un premier objet l'invention est de proposer un procédé de recyclage, apte à traiter une solution de mouillage de sorte à permettre sa réutilisation.

Un deuxième objet de l'invention est de proposer un tel procédé de recyclage nécessitant des durées de maintenance réduites.

Un troisième objet de l'invention est de proposer une unité de recyclage d'une solution de mouillage mettant en oeuvre le procédé de recyclage tel que présenté ci-dessus.

Un quatrième objet de l'invention est de proposer une unité de recyclage à coût réduit en termes d'utilisation et de maintenance.

Un cinquième objet de l'invention est de proposer une unité de contrôle permettant de commander l'unité de recyclage telle que présentée ci-dessus.

A cet effet, il est proposé, en premier lieu, un procédé de recyclage d'un effluent d'imprimerie, l'effluent d'imprimerie étant une solution aqueuse comprenant un solvant oxygéné, la solution aqueuse étant mélangée à des résidus solides et/ou liquides, ce procédé étant mis en oeuvre au moyen d'une unité de recyclage comprenant :
- un premier dispositif de filtration par lit granulaire, le dispositif de filtration étant muni d'une pluralité de couches de matériaux granulaires superposées, les matériaux granulaires comprenant des matériaux minéraux intégrant de la silice,
- un deuxième dispositif de filtration par paroi filtrante, le procédé comprenant :
   - une étape de première filtration, par lit granulaire, de l'effluent au moyen d'un premier dispositif de filtration par lit granulaire destiné à retenir les résidus de l'effluent ayant au moins une première taille;
   - une étape de deuxième filtration, par paroi filtrante, de l'effluent ayant subi l'étape de première filtration, l'étape de deuxième filtration étant réalisée au moyen du deuxième dispositif de filtration par paroi filtrante destiné à retenir les résidus de l'effluent ayant au moins une deuxième taille, la deuxième taille étant inférieure à la première taille.

Par un tel procédé, le premier dispositif de filtration, protège le deuxième dispositif de filtration d'un colmatage trop rapide, ce qui permet de limiter les opérations de maintenance du deuxième dispositif de filtration. En outre, le premier dispositif de filtration à lit granulaire offre l'avantage de se colmater plus lentement qu'un dispositif de filtration à paroi filtrante.

Diverses caractéristiques supplémentaires peuvent être prévues, seules ou en combinaison :
- le procédé de recyclage comprend une étape de troisième filtration, par paroi filtrante, et une étape de quatrième filtration, par paroi filtrante, de l'effluent ayant respectivement subi l'étape de deuxième filtration et l'étape de troisième filtration, l'étape de troisième filtration étant destinée à retenir les résidus supérieurs à une troisième taille par l'intermédiaire d'un troisième dispositif de filtration par paroi filtrante, l'étape de quatrième filtration étant destinée à retenir les résidus supérieurs à une quatrième taille, par l'intermédiaire d'un quatrième dispositif de filtration par paroi filtrante, la troisième taille étant supérieure à la quatrième taille ;
- le procédé de recyclage comprend une étape de cinquième filtration, par lit granulaire, de l'effluent ayant subi l'étape de quatrième filtration, au moyen d'un cinquième dispositif de filtration par lit granulaire comprenant des matériaux adsorbants, destinée à retenir les résidus ayant au moins une cinquième taille, la cinquième taille étant inférieure à la quatrième taille ;
- le procédé de recyclage comprend une étape de sixième filtration, par paroi filtrante, de l'effluent ayant subi une étape de cinquième filtration, destinée à retenir les résidus de l'effluent d'imprimerie ayant au moins une sixième taille au moyen d'un sixième dispositif de filtration par paroi filtrante, la sixième taille étant inférieure à la cinquième taille, et une étape de réintroduction de l'effluent ayant subi l'étape de sixième filtration au sein d'une machine d'impression ;
- le procédé de recyclage comprend une étape d'arrêt d'alimentation de l'unité de recyclage en effluent, puis une étape d'introduction d'eau pendant un temps prédéterminé dans le premier dispositif de filtration, dans un sens de circulation contraire au sens de circulation de l'effluent d'imprimerie au sein du premier dispositif de filtration.

Il est proposé, en deuxième lieu, un produit programme d'ordinateur implémenté sur un support mémoire, susceptible d'être mis en oeuvre au sein d'une unité de traitement informatique et comprenant des instructions pour la commande du procédé précédemment présenté.

Il est proposé, en troisième lieu, une unité de recyclage d'un effluent d'imprimerie, l'effluent d'imprimerie étant une solution aqueuse comprenant un solvant oxygéné, la solution aqueuse étant mélangée à des résidus solides et/ou liquides, l'unité de recyclage comprenant :
- un premier dispositif de filtration par lit granulaire muni d'une pluralité de couches superposées les unes aux autres de matériaux granulaires minéraux comprenant de la silice, le premier dispositif de filtration étant destiné à retenir par filtration les résidus de l'effluent supérieurs à une première taille,
- un deuxième dispositif de filtration par paroi filtrante destiné à retenir par filtration les résidus de l'effluent supérieurs à une deuxième taille,
le premier dispositif de filtration étant disposé en amont du deuxième dispositif de filtration par rapport au sens de circulation de l'effluent dans l'unité de recyclage, de sorte que l'effluent ait subit la filtration par le premier dispositif de filtration avant la filtration par le deuxième dispositif de filtration.

Selon des modes de réalisation, le premier dispositif de filtration par lit granulaire comprend une première couche, une deuxième couche, une troisième couche, une quatrième couche, chacune des couches présentant respectivement un intervalle de granulométrie propre, l'effluent étant destiné à percoler à travers la quatrième couche, puis la troisième couche, puis la deuxième couche, puis la première couche , chaque intervalle de granulométrie présentant des bornes de plus en plus petites lors du passage de l'effluent d'une couche à l'autre durant la percolation de l'effluent au sein du premier dispositif de filtration.

Selon d'autres modes de réalisation, l'unité de recyclage comprend :
- un troisième dispositif de filtration, placé en aval du deuxième dispositif de filtration, destiné à retenir les résidus ayant au moins une troisième taille,
- un quatrième dispositif de filtration destiné à retenir les résidus ayant au moins une quatrième taille,
- un cinquième dispositif de filtration, placé en aval du quatrième dispositif de filtrage, destiné à retenir les résidus ayant au moins une cinquième taille, la cinquième taille étant inférieure à la quatrième taille, la quatrième taille étant inférieure à la troisième taille, la troisième taille étant inférieure à la deuxième taille.

Selon des mises en oeuvre avantageuses, le cinquième dispositif de filtration comprend des matériaux granulaires, les matériaux granulaires comprenant des matériaux granulaires possédant des propriétés adsorbantes uniquement pour les résidus solides et/ou liquides.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue schématique d'ensemble d'une unité de recyclage ;
- la figure 2 est un diagramme synoptique de l'intérieur de l'unité de recyclage ;
- la figure 3 est une vue schématique de détail d'un premier filtre ;
- la figure 4 est un diagramme fonctionnel illustrant différentes étapes d'un cycle de filtration d'une solution de mouillage ;
- la figure 5 est un diagramme synoptique d'un exemple de fonctionnement d'un cycle de nettoyage d'un premier dispositif de filtration de l'unité de recyclage.

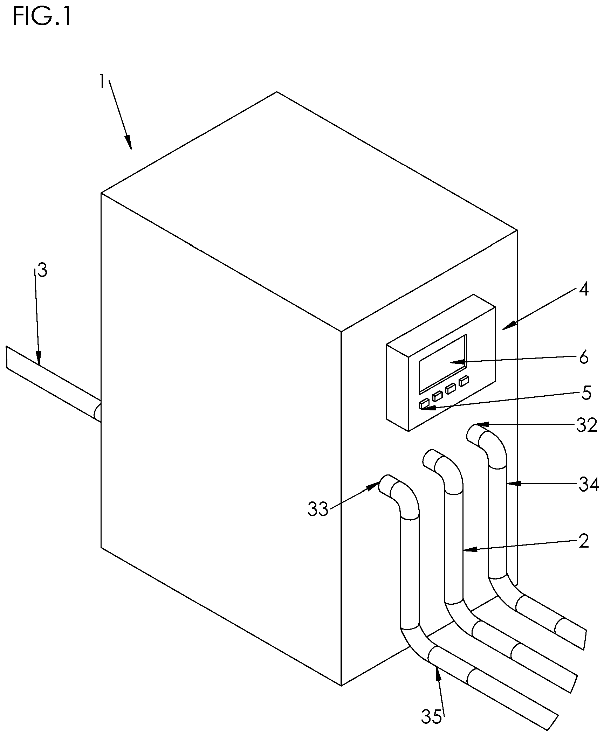

L'on se réfère à la figure 1, représentant une unité 1 de recyclage d'effluent d'impression provenant d'une machine d'impression (non représentée).

Dans les modes de réalisation présentement décrits, la machine d'impression est une machine utilisant le principe d'impression offset conventionnel, c'est-à-dire avec l'utilisation d'une solution de mouillage (ce qui exclue les procédés dits waterless), la machine d'impression étant une presse ou une rotative.

Dans le mode de réalisation décrit, l'effluent est une solution de mouillage usagée, autrement dit, une solution aqueuse composée d'un solvant oxygéné (l'IPA) et d'additifs. La solution de mouillage est contaminée par des composants, des résidus indésirables. Les résidus peuvent être de nature solide, comme des fibres de papiers, des poussières, et/ou de nature liquide comme de l'encre, et/ou de nature organique comme des algues, des microorganismes tels que des bactéries ou champignons.

L'unité **1** de recyclage a notamment pour fonction de réaliser une filtration de la solution de mouillage usagée, c'est-à-dire retirer les résidus indésirables de la solution de mouillage, de manière à permettre sa réutilisation ultérieure au sein d'une machine d'impression. Aussi, la composition de la solution de mouillage après son passage au sein de l'unité **1** de recyclage présente une composition sensiblement identique à une solution de mouillage non utilisée.

L'unité **1** de recyclage comprend un conduit **2** d'entrée, destiné à l'introduction de la solution de mouillage. Le conduit **2** d'entrée est ainsi raccordé à la machine d'impression, un réservoir (non représenté) ou une cuve (non représentée).

Pour permettre l'évacuation d'une solution de mouillage après filtration, l'unité **1** de recyclage comprend un conduit **3** de sortie, relié à l'alimentation (non représenté) de la machine d'impression, ou à un réservoir (non représenté) ou une cuve de stockage (non représentée), en vue d'une réutilisation ultérieure.

Tel qu'il apparaît sur la figure 1, l'unité **1** de recyclage comprend une unité **4** de contrôle, permettant notamment de commander et superviser le fonctionnement de l'unité **1** de recyclage. L'unité **4** de contrôle inclut un pupitre **5** de commande, muni d'un écran **6** permettant l'affichage d'informations par l'unité **4** de contrôle.

Selon des modes de réalisation non représentés, l'unité **4** de contrôle est reliée à un ordinateur de supervision, par exemple en utilisant un réseau informatique comme le réseau internet ou le réseau local de l'imprimerie.

Selon des modes de réalisation non représentés, l'unité **4** de contrôle communique, via le réseau téléphonique à un terminal mobile, par exemple un téléphone intelligent. De cette manière, il est possible de contrôler à distance l'unité **4** de contrôle, ce qui est avantageux pour le service d'aide du client à distance, ou la télémaintenance.

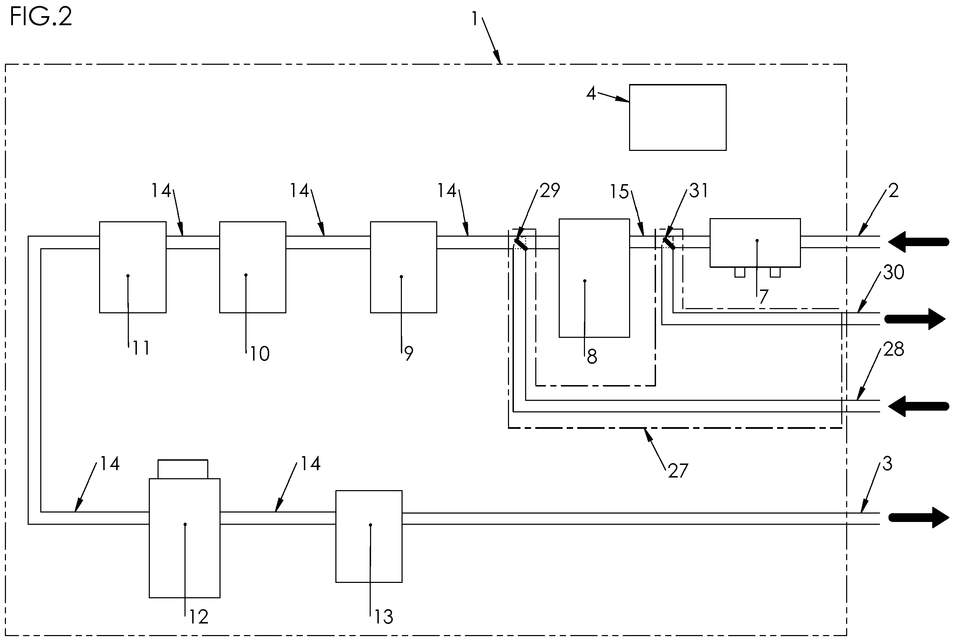

L'on se réfère à la figure 2, représentant un schéma synoptique représentant l'intérieur de l'unité **1** de recyclage.

L'unité **1** de recyclage comprend une pompe **7**, permettant de déplacer la solution de mouillage à filtrer dans un sens de circulation allant du conduit **2** d'entrée jusqu'au conduit **3** de sortie. Dans le mode de réalisation représenté, la pompe **7** permet d'introduire 3 à 100 m³/h de solution de mouillage dans l'unité **1** de recyclage, mais s'adapte en fonction du débit de filtration de la solution de mouillage.

La pompe est avantageusement commandée par un programme implémenté dans l'unité **4** de contrôle.

Comme représenté sur la figure 2, l'unité **1** de recyclage comprend une pluralité de dispositifs **8**, **9**, **10**, **11**, **12**, **13** de filtration, avantageusement montés en série, c'est-à-dire reliés les uns aux autres par des canalisations **14** de liaison.

Avantageusement, chacun des dispositifs **8**, **9**, **10**, **11**, **12**, **13** de filtration est positionné l'un à la suite de l'autre, de sorte à ce que la solution de mouillage passe successivement par chacun des dispositifs **8**, **9**, **10**, **11**, **12**, **13** de filtration.

Chacun des dispositifs **8**, **9**, **10**, **11**, **12**, **13** de filtration comprend un moyen de filtration, ou média de filtration, qui présente un seuil de coupure correspondant à la taille minimale des résidus retenus lors du passage de la solution de mouillage. Aussi, le passage de la solution de mouillage dans des médias de filtration par percolation permet l'extraction d'un filtrat (ou perméat), et laisse subsister un rétentat, c'est-à-dire les résidus indésirables retenus, qui présentent une taille supérieure au seuil de coupure des dispositifs **8**, **9**, **10**, **11**, **12**, **13** de filtration concernés.

Selon le mode de réalisation représenté, l'unité **1** de recyclage comprend un premier dispositif **8** de filtration ainsi qu'un deuxième dispositif **9** de filtration. Le premier dispositif **8** de filtration est disposé en amont du deuxième dispositif **9** de filtration, par rapport au sens de circulation de la solution de mouillage, au sein de l'unité **1** de recyclage. Autrement dit, la solution de mouillage pénètre le premier dispositif **8** de filtration avant le deuxième dispositif **9** de filtration.

Avantageusement, le premier dispositif **8** de filtration est connecté à la pompe **7** par l'intermédiaire d'une canalisation **15** de raccordement, permettant l'alimentation du premier dispositif **8** de filtration en solution de mouillage usagée.

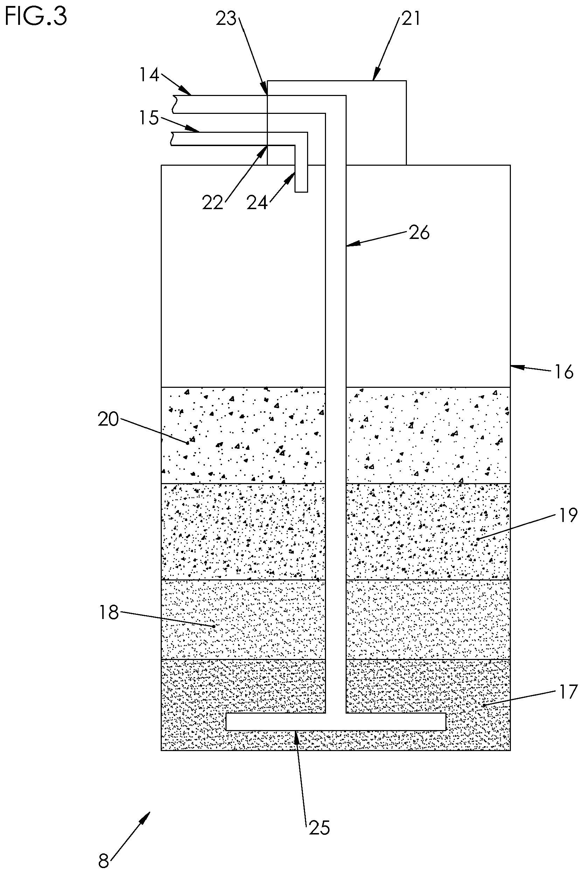

L'on se réfère à la figure 3 représentant un exemple d'un premier dispositif **8** de filtration, qui comprend au moins un média de filtration à lit granulaire. Dans le mode de réalisation représenté, le premier dispositif **8** de filtration comprend un récipient **16** rempli de plusieurs couches **17**, **18**, **19**, **20** ou lits de matériaux granulaires, superposés, c'est-à-dire disposés les uns sur les autres.

Par matériaux granulaires, il est entendu fragments de matériaux existant à l'état naturel ou issus de procédés industriels. Les couches **17**, **18**, **19**, **20** sont réparties en fonction de leur granulométrie, c'est-à-dire l'intervalle entre la dimension minimale et maximale des matériaux granulaires. Au sein de chacune des couches **17**, **18**, **19**, **20**, les fragments de matériaux comprennent un espacement intergranulaire permettant de former un seuil de coupure. De cette manière, les couches **17**, **18**, **19**, **20** sont perméables et poreuses, et forment par conséquent chacune un média de filtration.

L'utilisation de médias de filtration granulaires permet au premier dispositif **8** de filtration d'effectuer une filtration en profondeur, les résidus indésirables étant retirés lors du passage de la solution de mouillage dans l'épaisseur de l'ensemble des couches **17**, **18**, **19**, **20** de matériaux granulaires, ce qui permet de ralentir la formation d'un colmatage par rapport à une filtration réalisée uniquement sur un média de filtrage surfacique tel qu'une grille ou une membrane. De cette façon, les sédiments de taille les plus importantes sont retenus par un tel premier dispositif **8** de filtration, ce qui permet de notamment soulager le deuxième dispositif **9** de filtration, situé après le premier dispositif **8** de filtration. Les opérations de maintenance sont ainsi espacées.

Le récipient **16** est avantageusement une bouteille comprenant une tête **21** assortie d'un orifice **22** d'entrée, et d'un orifice **23** de sortie. L'orifice **22** d'entrée permet le branchement d'une canalisation **15** de raccordement, et l'orifice **23** de sortie permet le branchement d'une canalisation **14** de liaison.

Dans le mode de réalisation représenté, le récipient **16** est par exemple cylindrique, et est réalisé en fibre en verre, lui conférant notamment une résistance à la corrosion et aux produits chimiques. De plus, un tel récipient **16** présente une solidité mécanique lui permettant de résister à l'effort exercé tant par le passage de la solution de mouillage que par les couches **17**, **18**, **19**, **20** de matériaux granulaires. L'usure du récipient **16** est ainsi réduite, de sorte à limiter le risque de sa détérioration, ce qui permet de restreindre le nombre d'opérations de maintenance à effectuer.

Dans le mode de réalisation représenté, le premier dispositif **8** de filtration comprend en outre un moyen **24** d'aspersion, relié à l'orifice **22** d'entrée, permettant entre autre, la projection d'un liquide, par exemple la solution de mouillage sur les couches **17**, **18**, **19**, **2**0**.**

Le premier dispositif **8** de filtration comprend également une crépine **25**, reliée à l'orifice **23** de sortie. La crépine **25** est avantageusement disposée au voisinage du fond du récipient, pour récupérer un premier filtrat, c'est-à-dire la solution de mouillage après qu'elle ait subi l'action de filtration des couches **17**, **18**, **19**, **20**. Une telle crépine **25** évite notamment l'introduction de matériaux granulaires au sein de l'orifice **23** de sortie, ce qui empêche par exemple le mélange de matériaux granulaires des couches **17**, **18**, **19**, **20** avec le premier filtrat.

Afin de permettre l'évacuation de solution de mouillage du premier dispositif **8** de filtration, la crépine **25** est reliée à une cheminée **26**, favorablement tubulaire, non poreuse, et disposée verticalement au travers des différentes couches **17**, **18**, **19**, **20**. Ainsi, la solution de mouillage est apte à circuler successivement dans l'orifice **22** d'entrée, le moyen **24** d'aspersion, puis à percoler successivement à travers les couches **20**, **19**, **18**, **17**, la crépine **25**, la cheminée **26** et l'orifice **23** de sortie.

Selon le mode de réalisation représenté, le récipient **16** est rempli d'une première couche **17** et d'une deuxième couche **18** de sable, d'une troisième couche **18** présentant une granulométrie supérieure à la granulométrie de la première couche **17**. Au dessus de la deuxième couche **18** est disposée successivement une troisième couche **19** et une quatrième couche **20**, la quatrième couche **20** présentant une granulométrie supérieure à la troisième couche **19**. Ainsi, les couches **17**, **18**, **19**, **20** présentant chacune des intervalles de granulométrie croissants à partir du fond du récipient **16**, l'intersection entre les différents intervalles de granulométrie des couches étant nulle. Autrement dit, les bornes des intervalles de granulométrie de chacune des couches **17**, **18**, **19**, **20** deviennent de plus en plus petites suivant le sens de percolation de la solution de mouillage au sein du premier dispositif **8** de filtration.

Aussi, la solution de mouillage lors de sa progression au sein du premier dispositif **8** de filtration traverse successivement la quatrième couche **20**, la troisième couche **19**, la deuxième couche **18** puis la première couche **17**. Les couches **17**, **18**, **19**, **20** présentent donc un seuil de coupure décroissant en fonction de la progression de la solution de mouillage au sein du premier dispositif **8** de filtration. De cette manière, la filtration s'effectue par paliers, ce qui permet l'élimination progressive des résidus indésirables au fur et à mesure de la progression de la solution de mouillage au travers des différentes couches **17**, **18**, **19**, **20**. En raison de la nature gélatineuse des résidus en sortie de la machine d'impression, notamment les fibres de papiers imbibées d'eau, la multiplication des couches évite un colmatage trop rapide des couches. De cette façon, il est permis d'augmenter la durée d'exploitation, en limitant la fréquence des opérations de maintenance du premier dispositif **8** de filtration.

La hauteur des couches **17**, **18**, **19**, **20**, ainsi que leur dimension surfacique est fonction du débit attendu, et de la finesse de filtration. Plus les couches **17**, **18**, **19**, **20** présentent une profondeur importante, plus les pertes de charges sont élevées, mais plus longue est la période avant que le colmatage des couches **17**, **18**, **19**, **20** intervienne.

Dans le mode de réalisation représenté, les matériaux des couches **17**, **18**, **19, 20** sont des matériaux granulaires formés d'agrégats de minéraux, qui présentent des qualités de perméabilité spécifique leur permettant une filtration des résidus.

Avantageusement, les couches **17**, **18**, **19**, **20** comprennent de la silice. Un tel matériau présente des qualités avantageuses pour réaliser un média de filtration d'une solution de mouillage, car est chimiquement inerte aux acides tels que les acides des additifs de la solution de mouillage, et aux composés organiques, en l'occurrence l'IPA. En outre, compte tenue de sa dureté, la silice présente une attrition lente, ce qui permet de limiter la quantité de particules fines produites, et évite de polluer la solution de mouillage en cours de recyclage.

Dans le mode de réalisation représenté, la première couche **17** et la deuxième couche **18** sont des matériaux comprenant du sable, autrement dit, des matériaux granulaires présentant une granulométrie comprise entre 0.0063 et 2 mm. Le coefficient d'uniformité d'un tel sable, c'est-à-dire, le rapport entre deux diamètres apparents de grains, les diamètres étant définis de telle sorte que la taille de 60%, et respectivement 10% du sable soit inférieur, est au moins inférieur à 2. De cette manière, le sable est suffisamment homogène de manière à ne pas présenter de variation brusque, se qui ralentit l'apparition d'un colmatage ou d'un chemin préférentiel d'écoulement de la solution de mouillage.

Le sable est disposé au fond du récipient, de sorte qu'il subit une pression entre le fond du récipient et les couches **19**, **20** disposées au-dessus. Les premières et deuxième couches **17**, **18** sont donc compactées, et agglomérées. Le passage d'un liquide ne peut donc pas altérer la structure des première et deuxième couches **17**, **18**.

Avantageusement, le sable des première et deuxième couches **17**, **18** est concassé à partir d'une roche sédimentaire siliceuse comme par exemple du silex. L'utilisation du silex concassé est avantageuse car les grains sont anguleux, ce qui est favorable à la rétention de particules solides, qui seraient passées au travers des couches de graviers **19**, **20**.

Dans d'autres modes de réalisation, non représentés, la première couche **17** et la deuxième couche **18** sont respectivement du verre recyclé évoluant par exemple dans une granulométrie entre 0,2 mm à 0,5 mm. Le verre présente des arrêtes saillantes, ce qui lui permet une meilleure rétention des résidus. Le verre recyclé présente en outre l'avantage d'être compatible avec l'adjonction éventuelle d'une solution floculante permettant d'agglomérer les particules provenant de la machine d'impression entre elles, ce qui améliore la filtration.

Dans d'autres modes de réalisation non représentés, la première couche **17** et/ou la deuxième couche **18** comprend de la zéolite. Chaque grain présente une surface et une porosité supérieure à celle offerte par un sable de silex concassé, permettant des capacités de rétention des résidus accrus.

Dans d'autres modes de réalisation non représentés, la première couche **17** et/ou la deuxième couche **18** comprend du sable roulé, c'est-à-dire non concassé. Les grains d'un tel sable ne présentent pas d'arrêtés saillantes, ce qui limite les pertes de charges.

Avantageusement, la troisième couche **19** et la quatrième couche **20** sont réalisées en gravier, et sont par exemple comprises dans un fuseau entre 2,5 mm et 5 mm, avec un coefficient d'uniformité inférieur à 2. De cette façon, les corps solides issus de la machine d'impression par exemple fibre de papier, pigments d'encre peuvent être retenus, tout en limitant le risque de colmatage des couches **19**, **20**.

Avantageusement, la troisième couche **19** et la quatrième couche **20** sont des graviers issus de roche métamorphique comprenant de la silice cristallisée, par exemple du quartz. Un tel matériau est connu par son coût réduit, et sa durée de vie longue dans des utilisations de filtration. De cette façon, le nombre de remplacements des troisième et quatrième couches **19**, **20** du premier dispositif **8** de filtration est limité.

Dans le mode de réalisation décrit, un tel premier dispositif **8** de filtration permet d'éliminer les résidus supérieurs à une première taille, par exemple supérieure à 40 µm. Un tel premier dispositif **8** de filtration revêt notamment l'avantage de pouvoir être lavable, en introduisant de l'eau par l'orifice **23** de sortie. De cette façon, l'eau circule à travers la cheminée **26** et sort dans le récipient par l'intermédiaire de la crépine **25**. Il est ainsi possible d**e** récupérer les résidus indésirables retenus par les couches **17**, **18**, **19**, **20**, et de les extraire du récipient **16** par l'intermédiaire du moyen **24** de dispersion. Un nettoyage des médias filtrant peut ainsi être effectué. Une telle opération ne nécessite pas d'intervention particulière et est avantageusement prévue dans le fonctionnement de l'unité **1** de recyclage, comme spécifié plus loin dans la présente description.

Le deuxième dispositif **9** de filtration comprend un média de filtration à paroi filtrante. Par paroi filtrante, il est entendu tout élément s'étendant de manière sensiblement surfacique, constitué par exemple par un tissu, une cloison ou une membrane réalisée en matériaux métallique, polymère, textile ou tout autre élément filtrant, et qui comprend des pores. Les dimensions des pores déterminent le seuil de coupure du média filtrant.

Dans le mode de réalisation représenté, le deuxième dispositif **9** de filtration est connecté fluidiquement au premier dispositif **8** de filtration, par l'intermédiaire d'une canalisation **14** de liaison, et est placé après le premier dispositif **8** de filtration. De cette façon, le deuxième dispositif **9** de filtration est apte à recevoir le premier filtrat, c'est-à-dire la solution de mouillage ayant subit une filtration par le premier dispositif **8** de filtration.

Dans le mode de réalisation représenté, la paroi filtrante du deuxième dispositif **9** de filtration, comprend une grille métallique. Un tel deuxième dispositif **9** de filtration permet par exemple de réaliser la retenue des résidus supérieurs à 25 µm. Une grille métallique, par exemple en acier inoxydable, est avantageuse car elle peut être facilement nettoyée, et présente une durée de vie accrue, ce qui permet de limiter les coûts de maintenance.

Selon le mode de réalisation représenté, l'unité **1** de recyclage comprend un troisième dispositif **10** de filtration à paroi filtrante, ainsi qu'un quatrième dispositif **11** de filtration à paroi filtrante.

Par rapport au sens de circulation de la solution de mouillage au sein de l'unité **1** de recyclage, le troisième dispositif **10** de filtration est par exemple disposé en aval du deuxième dispositif **9** de filtration, et le quatrième dispositif **11** de filtration est localisé en aval du troisième dispositif **10** de filtration. Le troisième dispositif **10** de filtration est relié au quatrième dispositif **11** de filtration par l'intermédiaire d'une canalisation **14** de liaison.

Les troisième et quatrième dispositifs **10**, **11** de filtration comprennent par exemple chacun une cartouche jetable en fibre de polypropylène, chacune des cartouches comprenant une paroi filtrante. De telles cartouches filtrantes sont facilement remplaçables, et présentent une compacité accrue, permettant de limiter les dimensions de l'unité **1** de recyclage, ce qui facilite son intégration au sein d'une machine d'impression.

La dimension des pores de la paroi filtrante du troisième dispositif **10** de filtration, est de taille supérieure à la dimension des pores de la paroi filtrante du quatrième dispositif **11** de filtration.

Dans le mode de réalisation décrit, le seuil de coupure du troisième dispositif **10** de filtration est de 10 µm, et le seuil de coupure du quatrième dispositif **11** de filtration est de 5 µm.

Comme représenté sur la figure 2, l'unité **1** de recyclage comprend un cinquième dispositif **12** de filtration, relié au quatrième dispositif **11** de filtration. Le cinquième dispositif **12** de filtration est disposé en aval du quatrième dispositif **11** de filtration par rapport au sens de circulation de la solution de mouillage au sein de l'unité **1** de recyclage.

Selon le mode de réalisation représenté, le cinquième dispositif **12** de filtration est à lit granulaire. Le cinquième dispositif **12** de filtration comprend par exemple un contenant similaire au récipient **16** du premier dispositif **8** de filtration, le contenant étant rempli de matériaux granulaires ayant des propriétés adsorbantes, c'est-à-dire apte à fixer notamment les particules organiques.

Le récipient du cinquième dispositif **12** de filtration est rempli d'un tiers par des matériaux granulaires comprenant du charbon actif végétal, et d'un tiers de matériaux granulaires comprenant de l'anthracite, afin de combiner leurs propriétés adsorbantes respectives.

De tels matériaux adsorbants permettent de fixer des résidus solides ou liquides, telles que les particules indésirables de la solution de mouillage par exemple de l'hypochlorite de sodium (eau de javel), des bactéries, ou des particules odorantes, sans pour autant dénaturer la solution de mouillage. En effet, les composés de la solution de mouillage, en particulier l'alcool isopropylique ou les additifs, sont considérés comme étant peu sensibles au phénomène d'adsorption exercé par le charbon actif, et l'anthracite. De cette manière, il est créée une adsorption sélective.

Selon le mode de réalisation représenté, le cinquième dispositif **12** de filtration permettant de retirer des particules sensibles à l'adsorbance du charbon actif est de l'anthracite jusqu'à 1µm.

Selon le mode de réalisation représenté, l'unité **1** de recyclage comprend un sixième dispositif **13** de filtration, relié au cinquième dispositif **12** de filtration. Le sixième dispositif **13** de filtration est disposé en aval du cinquième dispositif **12** de filtration, par rapport au sens de circulation de la solution de mouillage au sein de l'unité **1** de recyclage.

Selon le mode de réalisation représenté, le sixième dispositif **13** de filtration comprend une paroi filtrante, qui présente des pores ayant la dimension la plus faible de l'ensemble des dispositifs **8**, **9**, **10**, **11**, **12**, **13** de filtration de l'unité **1** de recyclage. Le seuil de coupure d'un tel sixième dispositif **13** de filtration est par exemple de 0,1 µm, ce qui lui permet de retirer tout résidu qui aurait pu traverser par erreur les dispositifs **8**, **9**, **10**, **11**, **12** de filtration disposés en amont du sixième dispositif **13** de filtration. Un tel sixième dispositif **13** de filtration est un dispositif de sécurité, pour garantir la qualité de la solution de mouillage en sortie d'unité **1** de recyclage.

Avantageusement, l'unité **1** de recyclage comprend un dispositif **27** de nettoyage, afin de permettre le décrassage des médias du premier dispositif **8** de filtration. Le dispositif **27** de nettoyage comprend une canalisation **28** d'eau, une vanne **29** de commande d'eau, une canalisation **30** de rejet, et une vanne **31** de rejet.

Selon le mode de réalisation représenté, la canalisation **28** d'eau est raccordée à la canalisation **14** de liaison entre le premier dispositif **8** de filtration, et le deuxième dispositif **9** de filtration. Une telle canalisation **28** d'eau permet l'alimentation en eau du premier dispositif **8** de filtration, l'eau étant introduite dans le sens inverse de circulation de la solution de mouillage au sein du premier dispositif **8** de filtration.

Afin de ne pas introduire d'eau dans le premier dispositif **8** de filtration, et dans le deuxième dispositif **9** de filtration, lorsqu'une solution de mouillage circule, la vanne **29** de commande d'eau est avantageusement disposée entre la canalisation **14** de liaison, et la canalisation **28** d'eau.

Selon le mode de réalisation représenté, la canalisation **30** de rejet est raccordée à la canalisation **15** de raccordement, entre la pompe **7** et le premier dispositif **8** de filtration. Une telle canalisation **30** de rejet permet l'évacuation de fluide provenant du premier dispositif **8** de filtration, dans le sens inverse de circulation de la solution de mouillage.

Afin de ne pas introduire de résidus indésirables provenant du premier dispositif **8** de filtration au sein de la pompe **7**, la vanne **31** de rejet est avantageusement montée à l'intersection entre la canalisation **30** de rejet, et la canalisation **15** de raccordement entre la pompe **7** et le premier dispositif **8** de filtration.

Pour permettre l'alimentation en eau du dispositif **27** de nettoyage, l'unité **1** de recyclage comprend avantageusement une ouverture **32** d'alimentation en eau, permettant le raccordement d'un conduit **34** d'eau, ainsi qu'une ouverture **33** de rejet reliée à un conduit **35** de rejet. Le conduit **35** de rejet permet l'évacuation de l'eau munie du rétentat du premier dispositif **8** de filtration, et est par exemple relié à un autre dispositif de stockage (non représenté) ou à un autre dispositif d'épuration spécifique (non représenté).

Dans le mode de réalisation représenté, les vannes **29**, **31** sont avantageusement actionnées électriquement, et commandées par l'intermédiaire de l'unité **4** de contrôle.

Selon d'autres modes de réalisation, les vannes **29**, **31** sont actionnées uniquement manuellement, par l'intermédiaire de dispositifs d'actionnement accessibles à l'utilisateur.

Dans le mode de réalisation représenté, les dispositifs **8**, **9**, **10**, **11**, **12**, **13** de filtration sont munis de capteurs en communication avec l'unité **4** de contrôle, de manière à superviser l'état des dispositifs **8**, **9**, **10**, **11**, **12**, **13** de filtration.

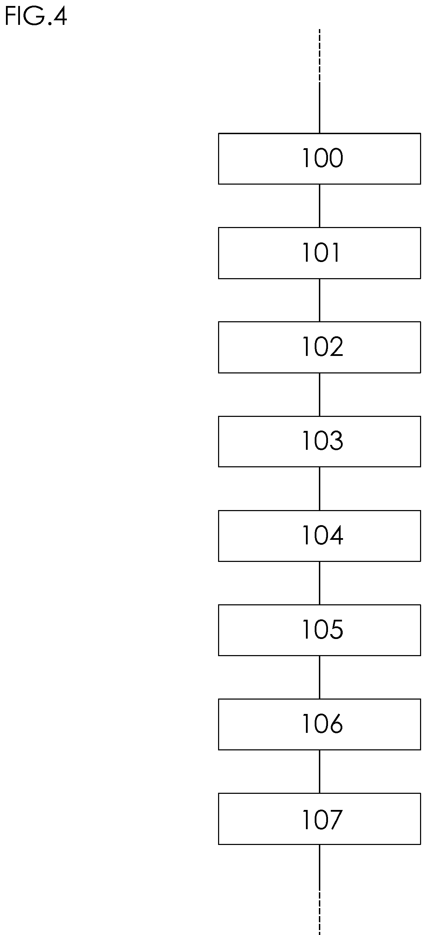

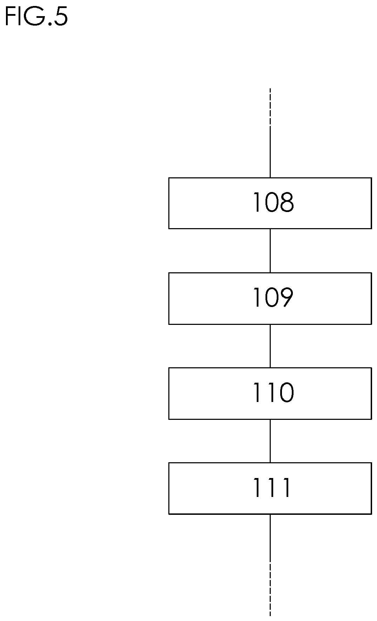

L'on se reporte désormais aux figures 4 et 5 représentant des diagrammes fonctionnels illustrant un exemple de fonctionnement de l'unité **1** de recyclage décrite ci-dessus.

Dans la figure 3 est illustré un cycle de filtration effectué par l'unité **1** de recyclage.

Selon le mode de réalisation représenté, dans une étape **100** d'initialisation, la vanne **31** de rejet est positionnée de telle sorte à fermer le conduit **35** de rejet, et la vanne **29** de commande d'eau est positionnée afin de fermer la canalisation **28** d'eau. Il en résulte que l'unité **1** de recyclage est apte à être alimentée par la solution de mouillage par l'intermédiaire du conduit **2** d'entrée, et alimente ainsi le premier dispositif **8** de filtration. Une telle étape **100** d'initialisation n'est bien entendue pas réalisée pour le cas où l'unité **1** de recyclage ne présente pas de dispositif **27** de nettoyage.

Après mise en route de la pompe **7**, une étape **101** de première filtration par lit granulaire est effectuée, par l'intermédiaire du premier dispositif **8** de filtration, ce qui permet de retenir les résidus de la solution de mouillage supérieurs à une première taille. Les résidus présentant la taille la plus importante, comme des sédiments ou des boues, formés par exemple d'agrégation de fibres de papier, sont ainsi éliminés de la solution de mouillage par le premier dispositif 8 de filtration.

Une telle étape **101** de première filtration par lit granulaire, considérée comme une pré-filtration, est réalisée par un premier dispositif **8** de filtration par lit granulaire. Il est ainsi permis de limiter la vitesse de survenue du colmatage, en raison de la filtration en profondeur effectuée par les couches **17**, **18**, **19**, **20** granulaires, et d'espacer le nettoyage des médias filtrants.

Dans une étape **102** de deuxième filtration, le premier filtrat, c'est-à-dire la solution de mouillage préalablement retirée des résidus supérieur à la première taille, est dirigé au sein d'un deuxième dispositif **9** de filtration, par l'intermédiaire d'une canalisation **14** de liaison. Dans une telle étape **102** de deuxième filtration, le premier filtrat subit une filtration par l'intermédiaire du deuxième dispositif **9** de filtration. La filtration est réalisée par paroi filtrante, pour retenir des résidus de la solution de mouillage ayant au moins une deuxième taille, la deuxième taille étant inférieure à la première taille.

Avoir une étape de filtration par lit granulaire avant l'étape **102** de deuxième filtration par paroi filtrante est avantageux, car les éléments présentant la taille la plus importante, comme les sédiments, sont retirés du premier filtrat, ce qui permet de limiter les risques de colmatage du deuxième dispositif **9** de filtration.

Selon le mode de réalisation représenté, une étape **103** de troisième filtration par paroi filtrante a lieu. Une telle étape **103** de troisième filtration permet de retenir les résidus supérieurs à une troisième taille, la troisième taille étant inférieure à la deuxième taille.

Selon le mode de réalisation représenté, une étape **104** de quatrième filtration par paroi filtrante a lieu. Une telle étape **104** de quatrième filtration permet de retenir les résidus supérieurs à une quatrième taille, la quatrième taille étant inférieure à la troisième taille.

Grâce aux étapes **103**, **104**, **105** de deuxième, troisième et quatrième filtration, il est réalisé une filtration par paliers successifs. En fait, la solution de mouillage est progressivement filtrée. Il est ainsi évité d'avoir une différence de seuil de coupure trop importante entre les différents dispositifs **9**, **10**, **11** de filtration, ce qui pourrait engendrer un risque de colmatage accru. En outre, dans le cas d'utilisation d'un deuxième dispositif **9** de filtration, d'un troisième dispositif **10** de filtration, et d'un quatrième dispositif **11** de filtration à paroi filtrante se présentant sous la forme de cartouches jetables, un remplacement des cartouches non simultané est permis. Une telle disposition permet d'étaler dans le temps les opérations de remplacement des cartouches des dispositifs **10**, **11** de filtration concernés.

De manière à permettre l'élimination de particules présentant une taille inférieure à la quatrième taille, une étape **106** de cinquième filtration est réalisée sur la solution de mouillage après son passage au sein du quatrième dispositif de filtration, par l'intermédiaire d'un cinquième dispositif **12** de filtration granulaire comprenant du charbon.

De cette façon, l'étape **106** de cinquième filtration permet l'élimination de particules odorantes, de germes. Le filtrat issu du cinquième dispositif **12** de filtration est en principe apte à être réutilisé dans les machines d'impression en tant que solution de mouillage.

Selon le mode de réalisation représenté, une étape **106** de sixième filtration permet de retirer des résidus issus du cinquième dispositif **12** de filtration, à l'aide d'un sixième dispositif **13** de filtration. Les résidus retenus sont supérieurs à une sixième taille, la sixième taille étant inférieure à la cinquième taille. De cette façon, l'étape **106** de sixième filtration est une étape permettant de retirer toute particule sortant du cinquième dispositif **12** de filtration. Le filtrat du sixième dispositif **13** de filtration s'évacue de l'unité **1** de recyclage par l'intermédiaire du conduit **3** de sortie, et est par exemple réintroduit dans la machine d'impression dans une étape **107** de réintroduction.

De manière non limitative, les étapes **101**, **102**, **103**, **104**, **105** et **106**, **107** sont effectuées, successivement, c'est-à-dire, les unes après les autres.

Dans d'autres modes de réalisation non représentés, seules les étapes **101** et **102** sont réalisées, avec en variante la possibilité de combiner l'une ou plusieurs des étapes **103**, **104**, **105**, **106**, **107**. La réalisation ou non des étapes **103**, **104**, **105** et **106** dépend du niveau de filtration attendue.

Selon des modes de réalisation non représentés, l'étape **107** de réintroduction de l'effluent est réalisée après l'étape **104**, ou après l'étape **105**, suivant la finesse de filtration attendue, et le niveau de pureté attendu de la solution de mouillage pour la machine d'impression, ce qui confère au procédé une flexibilité d'utilisation.

L'on se reporte à la figure 5, décrivant un exemple de procédé de lavage du premier dispositif **8** de filtration.

Le cycle de lavage est par exemple effectué après qu'une quantité prédéfinie de solution de mouillage ait subit le cycle de filtration, ou lorsqu'un colmatage du premier dispositif **8** de filtration a été constaté.

Dans le mode de réalisation représenté, le cycle de lavage est effectué à la suite de l'étape **106** de sixième filtration du cycle de filtration, mais le cycle de lavage est réalisable après n'importe quelle autre étape du cycle de filtration.

Dans une étape **108** d'arrêt d'alimentation de l'unité de recyclage en solution de mouillage, les vannes **29**, **31** sont actionnées de sorte à permettre de relier fluidiquement l'orifice **22** d'entrée au conduit **35** de rejet, et l'orifice **23** de sortie au conduit **34** d'eau. Ainsi, de l'eau est introduite dans le premier dispositif **8** de filtration dans un sens de circulation opposé au sens de circulation de la solution de mouillage. Le rétentat disposé au sein des couches **17**, **18**, **19**, **20** subit alors une poussée de l'eau vers l'orifice **22** d'entrée.

Avantageusement, l'alimentation en solution de mouillage est arrêtée en amont de l'unité **1** de recyclage, afin de permettre la vidange du premier dispositif **8** de filtration avant mise en route du nettoyage par le dispositif **27** de nettoyage.

Selon le mode de réalisation décrit, le procédé comprend une étape **110** de temporisation, où l'unité **4** de contrôle attend pendant une durée prédéterminée. Cette durée correspond par exemple au temps nécessaire pour que l'eau du nettoyage du premier dispositif **8** de filtration soit évacuée de l'unité **1** de recyclage. Ainsi, tout risque d'interférence entre l'eau de nettoyage et l'effluent est minimisé.

Dans une étape **111** de finalisation, les vannes **29**, **31** sont commandées, de sorte à être mises en position pour mettre en oeuvre le cycle de filtration, c'est à dire que la canalisation **28** d'eau est fermée par la vanne **29** de commande d'eau, et le conduit **35** de rejet est fermé par la vanne **31** de rejet.

Dans un autre mode de réalisation, non représenté, un capteur détecte que le nettoyage des couches **17**, **18**, **19**, **20** est accompli, et envoie l'information à l'unité **4** de contrôle qui pilote la fermeture des vannes **29**, **31**.

Selon le mode de réalisation représenté, le cycle de filtration et le cycle de contrôle sont pilotés, commandés, contrôlés par un programme d'ordinateur implémenté dans l'unité **4** de contrôle.

L'unité **1** de recyclage d'eau et son procédé de fonctionnement présentent plusieurs avantages, comme par exemple:
- un niveau de filtration permettant d'obtenir une solution de mouillage apte à permettre sa réutilisation ;
- la possibilité d'adapter le niveau de filtration attendue ;
- la limitation de l'utilisation de consommables tels que des cartouches de filtration, ce qui permet de limiter les coûts liés au traitement de l'eau ;
- des risques de colmatages limités des différents dispositifs **8**, **9**, **10**, **11**, **12**, **13** de filtration ;
- des consommables facilement accessibles dans le commerce.

## Revendications

1. Procédé de recyclage d'un effluent d'imprimerie, l'effluent d'imprimerie étant une solution aqueuse comprenant un solvant oxygéné, la solution aqueuse étant mélangée à des résidus solides et/ou liquides, ce procédé étant mis en oeuvre au moyen d'une unité (**1**) de recyclage comprenant :
- un premier dispositif (**8**) de filtration par lit granulaire, le dispositif de filtration étant muni d'une pluralité de couches (**17**, **18**, **19**, **20**) de matériaux granulaires superposées, les matériaux granulaires comprenant des matériaux minéraux intégrant de la silice,
- un deuxième dispositif (**9**) de filtration par paroi filtrante,
ce procédé comprenant :
- une étape (**101**) de première filtration, par lit granulaire, de l'effluent au moyen du premier dispositif (**8**) de filtration par lit granulaire destiné à retenir les résidus de l'effluent ayant au moins une première taille ;
- une étape (**102**) de deuxième filtration, par paroi filtrante, de l'effluent ayant subi l'étape (**101**) de première filtration, l'étape (**102**) de deuxième filtration étant réalisée au moyen du deuxième dispositif (**9**) de filtration par paroi filtrante destiné à retenir les résidus de l'effluent ayant au moins une deuxième taille, la deuxième taille étant inférieure à la première taille.

2. Procédé de recyclage selon la revendication précédente, **caractérisé en ce qu'**il comprend une étape (**103**) de troisième filtration, par paroi filtrante, et une étape (**104**) de quatrième filtration, par paroi filtrante, de l'effluent ayant respectivement subi l'étape (**102**) de deuxième filtration et l'étape (**103**) de troisième filtration, l'étape (**103**) de troisième filtration étant destinée à retenir les résidus supérieurs à une troisième taille par l'intermédiaire d'un troisième dispositif (**10**) de filtration par paroi filtrante, l'étape (**104**) de quatrième filtration étant destinée à retenir les résidus supérieurs à une quatrième taille par l'intermédiaire d'un quatrième dispositif (**11**) de filtration par paroi filtrante, la troisième taille étant supérieure à la quatrième taille.

3. Procédé de recyclage selon la revendication précédente, **caractérisé en ce qu'**il comprend une étape (**105**) de cinquième filtration, par lit granulaire, de l'effluent ayant subi l'étape (**104**) de quatrième filtration, au moyen d'un cinquième dispositif (**12**) de filtration par lit granulaire comprenant des matériaux adsorbants, destinée à retenir les résidus ayant au moins une cinquième taille, la cinquième taille étant inférieure à la quatrième taille.

4. Procédé de recyclage selon la revendication précédente, **caractérisé en ce qu'**il comprend une étape (**106**) de sixième filtration, par paroi filtrante, de l'effluent ayant subi une étape (**105**) de cinquième filtration, destinée à retenir les résidus de l'effluent d'imprimerie ayant au moins une sixième taille au moyen d'un sixième dispositif (**13**) de filtration par paroi filtrante, la sixième taille étant inférieure à la cinquième taille, et une étape (**107**) de réintroduction de l'effluent ayant subi l'étape (**106**) de sixième filtration au sein d'une machine d'impression.

5. Procédé de recyclage selon l'une quelconque des revendications précédentes, **caractérisé en ce qu'**il comprend une étape (**107**) d'arrêt d'alimentation de l'unité (**1**) de recyclage en effluent, puis une étape (**108**) d'introduction d'eau pendant un temps prédéterminé dans le premier dispositif (**8**) de filtration, dans un sens de circulation contraire au sens de circulation de l'effluent d'imprimerie au sein du premier dispositif (**8**) de filtration.

6. Produit programme d'ordinateur implémenté sur un support mémoire, susceptible d'être mis en oeuvre au sein d'une unité de traitement informatique et comprenant des instructions pour la commande du procédé de l'une quelconque des revendications 1 à 5.

7. Unité (**1**) de recyclage d'un effluent d'imprimerie, l'effluent d'imprimerie étant une solution aqueuse comprenant un solvant oxygéné, la solution aqueuse étant mélangée à des résidus solides et/ou liquides, cette unité (**1**) de recyclage comprenant :
- un premier dispositif (**8**) de filtration par lit granulaire muni d'une pluralité de couches (**17**, **18**, **19**, **20**) superposées les unes aux autres de matériaux granulaires comprenant de la silice, le premier dispositif (**8**) de filtration étant destiné à retenir par filtration les résidus de l'effluent supérieurs à une première taille,
- un deuxième dispositif (**9**) de filtration par paroi filtrante destiné à retenir par filtration les résidus de l'effluent supérieurs à une deuxième taille, la deuxième taille étant inférieure à la première taille,
le premier dispositif (**8**) de filtration étant disposé en amont du deuxième dispositif (**9**) de filtration par rapport au sens de circulation de l'effluent dans l'unité (**1**) de recyclage, de sorte que l'effluent ait subit la filtration par le premier dispositif (**8**) de filtration avant la filtration par le deuxième dispositif (**9**) de filtration.

8. Unité (**1**) de recyclage selon la revendication précédente, **caractérisée en ce que** le premier dispositif (**8**) de filtration par lit granulaire comprend une première couche (**17**), une deuxième couche (**18**), une troisième couche (**19**), une quatrième couche (**20**), chacune des couches (**17**, **18**, **19**, **20**) présentant respectivement un intervalle de granulométrie propre, l'effluent étant destiné à percoler à travers la quatrième couche (**20**), puis la troisième couche (**19**), puis la deuxième couche (**18**), puis la première couche (**17**), chaque intervalle granulométrie présentant des bornes de plus en plus petites lors du passage de l'effluent d'une couche à l'autre durant la percolation de l'effluent au sein du premier dispositif (**8**) de filtration.

9. Unité (**1**) de recyclage selon l'une quelconque des revendications 7 ou 8, **caractérisée en ce qu'**elle comprend:
- un troisième dispositif (**10**) de filtration, placé en aval du deuxième dispositif (**9**) de filtration, destiné à retenir les résidus ayant au moins une troisième taille,
- un quatrième dispositif (**11**) de filtration, placé en aval du troisième dispositif (**10**) de filtration destiné à retenir les résidus ayant au moins une quatrième taille,
- un cinquième dispositif de filtration, placé en aval du quatrième dispositif de (**11**) de filtration, et destiné à retenir les résidus ayant au moins une cinquième taille, la cinquième taille étant inférieure à la quatrième taille, la quatrième taille étant inférieure à la troisième taille, la troisième taille étant inférieure à la deuxième taille.

10. Unité (**1**) de recyclage selon la revendication précédente, **caractérisée en ce que** le cinquième dispositif (**12**) de filtration comprend des matériaux granulaires possédant des propriétés adsorbantes uniquement pour les résidus liquides et/ou solides.
